# EUROPÄISCHE PATENTSCHRIFT

(11) **EP 3 487 049 B1**
(45) Veröffentlichungstag und Bekanntmachung des Hinweises auf die Patenterteilung: **17.01.2024**
(21) Anmeldenummer: 17306596.2
(22) Anmeldetag: 17.11.2017
(51) Int. Cl.: H02K 41/03

(54) **LINEARMOTOR MIT TRANSVERSALFLUSS**
LINEAR MOTOR COMPRISING A TRANSVERSAL FLUX
MOTEUR LINÉAIRE Á FLUX TRANSVERSAL

(43) Veröffentlichungstag der Anmeldung: 22.05.2019
(73) Patentinhaber: Schneider Electric Industries SAS, 92500 Rueil-Malmaison (FR)
(72) Erfinder: Brandstätter, Wolfgang, 77955 Ettenheim (DE)
(74) Vertreter: Manitz Finsterwald Patent- und Rechtsanwaltspartnerschaft mbB

(56) Entgegenhaltungen:
- WO-A1-2014/049193
- WO-A1-2015/040620
- DE-A1-102010 034 550

## Beschreibung

Die vorliegende Erfindung betrifft ein Linearmotorsystem mit mehreren Statorelementen, die jeweils eine Magnetspule umfassen, und mit zumindest einem Läufer, welcher ein Magnetelement aufweist, das mit den Magnetspulen der Statorelemente in Wechselwirkung steht, und welcher mittels Aktivierung zumindest eines geeigneten Statorelements in einer Bewegungsrichtung relativ zu den Statorelementen verschiebbar ist.

Bekannte Linearmotorsysteme sind von herkömmlichen Elektromotoren abgeleitet, die einen Rotor mit Permanentmagnet aufweisen, der innerhalb von Statorelementen mit einer jeweiligen Magnetspule angeordnet ist. Durch eine Aktivierung jeweiliger Magnetspulen, d.h. durch einen Strom, der jeweils durch diese hindurchfließt, wird der Rotor solcher Elektromotoren in Drehung versetzt.

Bei den bekannten Linearmotorsystemen sind die Statorelemente eines herkömmlichen Elektromotors sozusagen abgewickelt und linear hintereinander angeordnet. Dem Rotor eines herkömmlichen Elektromotors entspricht im Linearmotorsystem ein Läufer, der entlang einer vorgegebenen Bewegungsbahn verschiebbar ist. Entlang der Bewegungsbahn des Läufers wird die erforderliche Anzahl von Statorelementen angeordnet. In bekannten Linearmotorsystemen stellen die Statorelemente somit eine periodische Wiederholung der Statorelemente eines herkömmlichen Elektromotors dar.

Linearmotorsysteme mit Magnetspulen in den Statorelementen, bei denen der Abstand zwischen Statorelementen erheblich größer als die Länge des Läufers ist, weisen den Nachteil von Streufeldern und einer hohen Induktivität auf. Daher ist es in diesem Fall schwierig, zum Bewegen des Läufers mehrere Statorelemente zu aktivieren, wenn mehrere Statorelemente hintereinander angeordnet sind, um die gesamte Bewegungsbahn des Läufers abzudecken.

Aufgrund der Relativbewegung zwischen dem Läufer und den Statorelementen können bei einem Linearmotor - bezogen auf einen herkömmlichen Elektromotor - Rotor und Stator vertauscht und die Rotorelemente periodisch wiederholt werden. Solche Bauformen von Linearmotoren können beispielsweise aus der "Abwicklung" eines konventionellen Elektromotors mit Außenpolläufer hergeleitet werden.

Ferner verläuft bei bekannten Linearmotorsystemen der magnetische Fluss der Statorelemente in einer longitudinalen Richtung, d.h., dass die Magnetfeldlinien der Statorelemente in Ebenen verlaufen, die zur Bewegungsrichtung des Läufers bzw. zu einer Tangente an die Bewegungsbahn des Läufers parallel sind. Dies hat zur Konsequenz, dass stets mindestens zwei Statorelemente bzw. Magnetspulen zweier Statorelemente (insbesondere magnetisch) gekoppelt sind und diese Kopplung bei der Aktivierung der Statorelemente, um den Läufer zu bewegen, zu berücksichtigen ist. Wenn das Linearmotorsystem mehrere Läufer aufweist, kann daher ein Mindestabstand zwischen den Läufern nicht unterschritten werden, wenn die Läufer unabhängig voneinander bewegt werden sollen.

Bei einem Stator mit longitudinalem magnetischem Fluss müssen aufgrund der Aktivierung mindestens zweier Statorelemente die Magnetspulen verschiedener Statorelemente miteinander ausgerichtet werden, damit der magnetische Fluss insgesamt in der gewünschten Richtung verläuft. Daher ist die Flexibilität bei der Anordnung mehrerer Statorelemente mit longitudinalem magnetischem Fluss eingeschränkt, wodurch die Gestaltung der gewünschten Bewegungsbahn des Läufers eingeschränkt ist und erhöhte Anforderungen an die Genauigkeit der Fertigung bestehen.

Es sind darüber hinaus Motoren mit transversalem magnetischem Fluss bekannt, die auch bei Linearmotorsystemen verwendet werden. Bei diesen ist der Läufer jedoch typischerweise nicht mit Permanentmagneten, sondern mit Magnetspulen ausgestattet.

Aus der WO 2015/040620 A1 ist ein Linearmotorsystem mit den Merkmalen gemäß dem Oberbegriff des Anspruchs 1 bekannt.

Die DE 10 2010 034 550 A1 beschreibt ein ähnliches Linearmotorsystem.

In der WO 2014/049193 A1 ist ebenfalls ein ähnliches Linearmotorsystem beschrieben.

Eine Aufgabe der Erfindung besteht darin, ein Linearmotorsystem zu schaffen, das eine flexible Gestaltung der Bewegungsbahn für den Läufer und eine flexible Bewegung der Läufer gestattet.

Diese Aufgabe wird durch ein Linearmotorsystem mit den Merkmalen des Anspruchs 1 gelöst und insbesondere durch ein Linearmotorsystem mit mehreren Statorelementen und zumindest einem Läufer, bei welchem der magnetische Fluss in zumindest einem der Statorelemente bezogen auf eine Bewegungsrichtung des Läufers zumindest abschnittsweise transversal verläuft. Das erfindungsgemäße Linearmotorsystem ist folglich ein Linearmotorsystem mit transversalem Fluss. Das Linearmotorsystem ist ausgebildet, die Magnetspulen der Statorelemente einzeln und unabhängig voneinander zu aktivieren.

Jedes Statorelement des Linearmotorsystems umfasst jeweils eine Magnetspule, kann jedoch auch optional mehrere Magnetspulen aufweisen, die gemeinsam einen magnetischen Fluss in dem jeweiligen Statorelement erzeugen. Der Läufer weist zumindest ein Magnetelement auf, das mit den Magnetspulen der Statorelemente in Wechselwirkung steht, und mittels Aktivierung zumindest eines geeigneten Statorelements (oder auch von mehreren geeigneten Statorelementen) in der Bewegungsrichtung relativ zu den Statorelementen verschiebbar ist. Die Aktivierung eines Statorelements erfolgt dabei dadurch, dass die jeweilige Magnetspule des Statorelements aktiviert wird, indem ein Strom durch die Magnetspule fließt bzw. in die Magnetspule eingeprägt wird.

Der transversale Verlauf des magnetischen Flusses des zumindest einen Statorelements bezogen auf die Bewegungsrichtung des Läufers ist dadurch definiert, dass die Feldlinien des Magnetfelds, das durch die jeweilige Magnetspule erzeugt wird, jeweils in einer Ebene verlaufen, die senkrecht zur Bewegungsrichtung des Läufers ausgerichtet ist. Mit anderen Worten bildet ein Normalenvektor der Ebenen, in der die Feldlinien des Magnetfelds der Statorelemente verlaufen, einen Tangentenvektor an einer Bewegungsbahn des Läufers.

Der magnetische Schluss im Bereich eines Statorelements erfolgt jeweils durch ein einzelnes Statorelement selbst und ,falls vorhanden, durch das Magnetelement des Läufers. Der von der Magnetspule generierte magnetische Fluss verläuft also zunächst innerhalb des Statorelements und tritt dann an z.B. zwei Übergangsstellen zunächst in die Umgebungsluft und anschließend in den Läufer über, wobei der Läufer den magnetischen Schluss herstellt. Bei dem erfindungsgemäßen Linearmotorsystem mit transversalem Fluss befinden sich die Übergangsstellen bevorzugt in einer Linie, die senkrecht bzw. quer zur Bewegungsrichtung verläuft.

Da das Linearmotorsystem ausgebildet ist, die Magnetspulen der Statorelemente einzeln und unabhängig voneinander zu aktivieren, ist jedes Statorelement des Linearmotorsystems einzeln und unabhängig von den anderen Statorelementen aktivierbar. Dies hat den Vorteil, dass mehrere Läufer in einem solchen Linearmotorsystem einzeln und unabhängig voneinander bewegt werden können. Die Läufer können bis zum Abstand benachbarter Statorelemente aufeinander zu bewegt bzw. aneinander herangefahren werden. Hierdurch kann eine sehr flexible Steuerung bzw. Verwendung von mehreren Läufern innerhalb desselben Linearmotorsystems gestattet werden.

Durch die einzelne und unabhängige Aktivierbarkeit der Statorelemente können diese flexibel entsprechend einer vorgegebenen Bewegungsbahn des zumindest einen Läufers angeordnet werden. Die Bewegungsbahn wird dabei durch die räumliche Anordnung der mehreren Statorelemente hintereinander (entlang der Bewegungsbahn) gebildet. Die Bewegungsbahn wiederum definiert die mögliche Bewegungsrichtung der Läufer. Da der Linearmotor mehrere Statorelemente In Bewegungsrichtung umfasst, wird diese auch als Erstreckungsrichtung des Linearmotors bezeichnet.

Ferner weist der Läufer aufgrund der unabhängigen Aktivierbarkeit der mehreren Statorelemente keine Mindestlänge in Bewegungsrichtung auf. Die Länge des Läufers in Bewegungsrichtung kann somit gleich dem Abstand zwischen zwei Statorelementen oder sogar kleiner als dieser sein. Dies gilt insbesondere für eisenlose Statorelemente, mit denen sehr kleine Läufer im Magnetfeld einer Magnetspule eines Statorelements bewegt werden können. Bei Statorelementen mit Eisen kann jedoch eine Mindestlänge des Läufers erforderlich sein, die sich über wenigstens z.B. drei Statorelemente erstreckt, da in diesem Fall Rastkräfte auftreten, d.h. Kräfte zwischen einem unbestromten Statorelement und dem Läufer.

Erfindungsgemäß werden nicht aktivierte Statorelemente zur Positionserfassung des Läufers verwendet. Der Begriff "nicht aktiviert" bezieht sich dabei auf einen Zustand der Statorelemente, in welchem deren Magnetspule nicht oder höchstens geringfügig bestromt wird, so dass noch keine Verschiebung des Läufers erfolgt, wenn sich der Läufer im Bereich eines zu dem nicht aktivierten Statorelement benachbarten Statorelements befindet. Es kann folglich auch ein geringer Strom durch ein "nicht aktiviertes" Statorelement fließen, falls dies zur Erfassung der Position des Läufers erforderlich ist.

Zur Positionserfassung des Läufers kann in die Magnetspule zumindest eines nicht aktivierten Statorelements ein Strom oder ein sich verändernder Strom eingeprägt werden, wobei anhand des Stroms die Induktivität des jeweiligen nicht aktivierten Statorelements erfasst wird. Aus der Induktivität kann dann auf die Anwesenheit oder Position des Läufers geschlossen werden. Der Läufer kann zu diesem Zweck, insbesondere an seinen in Bewegungsrichtung gesehenen Enden, ein magnetisches Material, beispielsweise Metall oder Eisen umfassen.

Vorteilhafte Ausführungen der Erfindung sind in den Unteransprüchen, der Beschreibung und in den Zeichnungen angegeben.

Gemäß einer Ausführungsform ist das Linearmotorsystem ausgebildet, die Statorelemente derart zu aktivieren, dass nur die Magnetspulen derjenigen Statorelemente aktiviert sind, die mit den Magnetelementen des Läufers in direkter magnetischer Wechselwirkung stehen. Da somit nur wenige Magnetspulen aktiviert sind, deren magnetischer Fluss transversal zur Bewegungsrichtung des Läufers verläuft, werden die Auswirkungen und Störungen durch Streufelder der Statorelemente verringert. Dadurch ergibt sich auch eine geringe Induktivität der zu aktlvlerenden Statorelemente, welche einen hoch dynamischen Betrieb des Linearmotorsystems erlaubt.

Bevorzugt ist das Linearmotorsystem ausgebildet, den Läufer durch die dynamische Aktivierung einer geeigneten Magnetspule eines einzigen Statorelements zu bewegen. Mit anderen Worten kann eine einzelne Magnetspule ausreichen, um den Läufer in Bewegung zu versetzen. Aufgrund der Aktivierung der Magnetspule eines einzigen Statorelements lässt sich der störende Einfluss von Streufeldern weiter verringern.

Gemäß einer weiteren Ausführungsform umfasst zumindest eines der Statorelemente mehrere in einer Richtung senkrecht zur Bewegungsrichtung aufeinander gestapelte magnetisch leitende Elemente. Die Erstreckungsrichtung der gestapelten magnetisch leitenden Elemente verläuft ebenfalls senkrecht zur Bewegungsrichtung (d.h. entlang des transversalen magnetischen Flusses). Die magnetisch leitenden Elemente verstärken den magnetischen Fluss senkrecht bzw. transversal bezogen auf die Bewegungsrichtung des Läufers. Durch die gestapelte Anordnung der magnetisch leitenden Elemente wird die Herstellung der Statorelemente vereinfacht. Dies gilt insbesondere dann, wenn die magnetisch leitenden Elemente mittels einer gestapelten Laminierung gebildet sind. Die Statorelemente können also mehrere Schichten eines magnetisch leitenden Materials (z.B. einer Eisenlegierungen, einer Eisen-Silizium-Legierung und/oder eines ferromagnetischen Stahls) umfassen.

Vorzugsweise umfasst zumindest eines der Statorelemente ein magnetisch leitfähiges Joch, das eine U-, E-, L- oder I-Form aufweist. Das magnetisch leitfähige Joch, das den magnetischen Fluss innerhalb der Statorelemente verstärkt, kann somit aufgrund der unterschiedlichen Formen flexibel an den für die Anordnung der Statorelemente vorhandenen Bauraum angepasst werden. Die Form des Läufers kann an die Form des Statorelements angepasst sein und insbesondere komplementär zu dem Statorelement sein.

Gemäß einer weiteren Ausführungsform sind mehrere Statorelemente entlang der Bewegungsrichtung des Läufers jeweils durch ein Verbindungselement gekoppelt. Die vorgesehene Bewegungsbahn des Läufers kann somit mittels der mehreren Statorelemente und mittels Verbindungselementen, welche die Statorelemente miteinander koppeln, gebildet und geformt werden. Dabei sind die Verbindungselemente insbesondere derart geformt, dass die Bewegungsbahn und damit die Bewegungsrichtung eine Krümmung aufweist.

Alternativ oder zusätzlich können die Verbindungselemente gerade ausgebildet sein, d.h., dass benachbarte Statorelemente durch ein Verbindungselement derart gekoppelt werden, dass der jeweilige magnetische Fluss der Statorelemente in parallelen Ebenen verläuft. Mittels unterschiedlicher Formen von Verbindungselementen kann somit baukastenartig eine beliebige Form einer vorgegebenen Bewegungsbahn des Läufers nachgebildet bzw. zusammengesetzt werden. Dabei können sämtliche Statorelemente, zwischen denen die Verbindungselemente angeordnet sind, baugleich sein, oder es kann zumindest ein Teil der Statorelemente baugleich sein. Darüber hinaus können auch die Verbindungselemente zum Teil identisch ausgebildet sein, was jedoch von der individuellen Form der Bewegungsbahn des Läufers abhängt. Falls die Verbindungselemente an eine Krümmung der Bewegungsbahn angepasst sind, verläuft der magnetische Fluss benachbarter Statorelemente nicht parallel zueinander. Mit anderen Worten sind die jeweiligen Ebenen, in denen der magnetische Fluss benachbarter Statorelemente verläuft, dann nicht parallel zueinander ausgerichtet.

Die Verbindungselemente sind vorzugsweise aus einem nicht-magnetischen und/oder magnetisch nicht leitfähigen Material geformt. Dadurch kann ein magnetischer Schluss über Verbindungselemente hinweg zwischen den Statorelementen verhindert werden. Ferner sind solche Verbindungselemente aus einem günstigen Material und auf einfache Weise herstellbar. Beispielsweise sind die Verbindungselemente aus einem Kunststoff und insbesondere mittels eines Spritzgussverfahrens hergestellt.

Die Statorelemente und die Verbindungselemente können jeweils separat voneinander hergestellt werden. Anschließend können die Statorelemente und die Verbindungselemente nach Art eines Baukastens beliebig zusammengesetzt werden, um eine jeweils benötigte Bewegungsbahn zu realisieren.

Vorteilhafterweise umfasst zumindest eines der Verbindungselemente eine Ansteuerelektronik zur Ansteuerung zumindest einer der Magnetspulen. Dadurch kann Bauraum im Bereich der Verbindungselemente, der nicht zur Bildung der Bewegungsbahn des Läufers verwendet werden muss und sich beispielsweise unter, neben und/oder in den Verbindungselementen befindet, ausgenutzt werden. Dadurch wird die Größe des Bauraums insgesamt verringert, der für das Linearmotorsystem erforderlich ist. Dementsprechend kann die Ansteuerelektronik innerhalb des Verbindungselements und/oder unter und/oder neben der Bewegungsbahn angeordnet sein. Das Linearmotorsystem kann eine Vielzahl von Ansteuerelektroniken umfassen, welche jeweils die Magnetspule eines einzelnen Statorelements oder mehrerer Statorelemente ansteuern. Die Ansteuerelektroniken können von einer gemeinsamen Stromversorgung mit elektrischer Energie versorgt werden.

Bevorzugt steuert die Ansteuerelektronik in zumindest einem Verbindungselement eine Magnetspule eines Statorelements an, welches beabstandet (d.h. nicht direkt angrenzend) zu dem Verbindungselement angeordnet ist. Beispielsweise kann die Ansteuerelektronik eine jeweilige Magnetspule des übernächsten Statorelements ansteuern. Dadurch ergibt sich insgesamt eine bessere Wärmeverteilung über das Linearmotorsystem, da sich die angesteuerte Magnetspule an einer ersten Position und die Ansteuerelektronik an einer zweiten Position erwärmt, die von der ersten Position beabstandet ist. Die Ansteuerelektronik kann ferner auch nicht-sinusförmige Ansteuersignale für die Magnetspulen verwenden.

Alternativ können die Verbindungselemente in eine Trägerplatte der Statorelemente integriert sein. Die Verbindung zwischen den Statorelementen wird in diesem Fall beispielsweise mittels Schrauben und entsprechenden Bohrungen in der Trägerplatte sowie mittels passender Gewinde in den Statorelementen hergestellt.

Die Magnetelemente des Läufers sind vorteilhafterweise Permanentmagnete. Dabei können die Permanentmagnete an einer Oberfläche des Läufers angeordnet sein, wobei der magnetische Nord- und Südpol der Magnetelemente insbesondere in einer Richtung senkrecht zur Bewegungsrichtung und senkrecht zu einer durch die Bewegungsbahn gebildeten Fläche hintereinander angeordnet sind.

Der Abstand zwischen zwei Permanentmagneten kann dabei als Polteilung bezeichnet werden, während der Abstand zwischen benachbarten Statorelementen als Nutteilung bezeichnet werden kann. Das Verhältnis der Polteilung zur Nutteilung kann bevorzugt beliebige Werte annehmen und ist beispielsweise nicht auf ganzzahlige Werte beschränkt.

Gemäß einer alternativen Ausführungsform ist das Magnetelement des Läufers in den Läufer eingebettet. Dies hat den Vorteil, dass beispielsweise kostengünstige AlNiCo-Magnete verwendet werden können. Der magnetische Nord- und Südpol der Magnetelemente sind dann quer/senkrecht zur Bewegungsrichtung und parallel zu einer durch die Bewegungsbahn gebildeten Fläche hintereinander angeordnet.

Vorzugsweise erfolgt ein magnetischer Nebenschluss im Läufer. Der magnetische Nebenschluss kann durch das Anbringen eines Nebenschlusselements, welches aus einem magnetisch leitfähigen Material gebildet ist, an dem Läufer erfolgen. Der magnetische Fluss innerhalb des Magnetelements des Läufers verläuft dabei derart, dass die magnetischen Feldlinien innerhalb des Läufers geschlossen sind. Durch den magnetischen Nebenschluss lassen sich die Magnetelemente des Läufers leichter installieren, da ihre magnetische Anziehungskraft verringert ist. Während des Betriebs des Linearmotorsystems wird jedoch der Nebenschluss entfernt, sodass hauptsächlich der magnetische Fluss, der durch die Statorelemente erzeugt wird, innerhalb des Läufers geschlossen wird.

Der magnetische Fluss der Magnetelemente des Läufers verläuft bevorzugt transversal (wie oben definiert) bezogen auf die Bewegungsrichtung des Läufers. Alternativ ist auch eine longitudinale Ausbildung des magnetischen Flusses für die Magnetelemente des Läufers möglich.

Wie erwähnt, erfolgt die Positionserfassung des Läufers im Stillstand oder bei einer langsamen Bewegung des Läufers also durch eine Messung einer Änderung der Induktivität der Magnetspulen. Zur Positionserfassung des Läufers kann ferner ein Träger des Läufers oder der Läufer selbst bezüglich der Form und/oder des Materials derart ausgebildet sein, dass die Induktivität benachbarter, nicht aktivierter Magnetspulen positionsabhängig verändert wird.

Die Position des Läufers kann bei Bewegung über eine Messung der vom Läufer in die Magnetspulen induzierten Spannung bzw. eine Messung entsprechender Ströme oder der daraus abgeleiteten Änderung der Induktivität sogar im Stillstand ermittelt werden, da die Magnetspulen der mehreren Statorelemente zur Aktivierung jeweils einzeln und unabhängig voneinander angesteuert werden und aufgrund des transversalen Flusses nicht notwendigerweise eine bestromte Nachbarspule vorhanden ist. Somit kann mit einfachen Mitteln eine Nachverfolgung der Position des Läufers im Linearmotorsystem realisiert werden, wodurch eine korrekte Ansteuerung der jeweils im Bereich der Position des Läufers befindlichen Spule realisiert werden kann.

Gemäß einer weiteren Ausführungsform sind mehrere Läufer im Linearmotorsystem vorgesehen, und das Linearmotorsystem ist ausgebildet, die Läufer unabhängig voneinander zu bewegen. Vorteilhafterweise kann bei der unabhängigen Bewegung der mehreren Läufer deren Abstand aufgrund der einzelnen und unabhängigen Aktivierung der Magnetspulen minimiert werden.

Ferner betrifft die Erfindung ein Verfahren zum Betreiben eines Linearmotorsystems, wie es insbesondere vorstehend beschrieben ist und welches mehrere Statorelemente, die jeweils eine Magnetspule zum Erzeugen eines magnetischen Flusses in dem jeweiligen Statorelement aufweisen, und zumindest einen Läufer umfasst, welcher zumindest ein Magnetelement aufweist, das mit den Magnetspulen der Statorelemente in Wechselwirkung steht. Gemäß dem Verfahren werden die Magnetspulen der Statorelemente einzeln und unabhängig voneinander aktiviert, und der Läufer wird dadurch in einer Bewegungsrichtung relativ zu den Statorelementen verschoben.

Darüber hinaus betrifft die Erfindung ein Statorelement, welches zumindest eine Magnetspule umfasst, die einen magnetischen Fluss in dem Statorelement erzeugt, und welches zur Verschiebung eines Läufers in einer Bewegungsrichtung relativ zu dem Statorelement aktivierbar ist. Der magnetische Fluss in dem Statorelement verläuft bezogen auf die Bewegungsrichtung des Läufers zumindest abschnittsweise transversal.

Die Ausführungen zu dem erfindungsgemäßen Linearmotorsystem gelten für das erfindungsgemäße Verfahren und das erfindungsgemäße Statorelement entsprechend, insbesondere hinsichtlich Vorteilen und bevorzugten Ausführungsformen.

Die Erfindung wird nachfolgend rein beispielhaft anhand möglicher Ausbildungen der Erfindung unter Bezugnahme auf die beigefügte Zeichnung erläutert. Es zeigen:
- Fig. 1: Elektromotoren und Linearmotorsysteme gemäß dem Stand der Technik,
- Fig. 2a und 2b: ein erfindungsgemäßes Linearmotorsystem, das einen Läufer mit einem longitudinalen magnetischen Fluss aufweist,
- Fig. 3a und 3b: ein erfindungsgemäßes Linearmotorsystem, das einen Läufer mit einem transversalen magnetischen Fluss aufweist,
- Fig. 4a, 4b und 4c: Statorelemente eines erfindungsgemäßen Linearmotorsystems, zwischen welchen Verbindungselemente angeordnet sind,
- Fig. 5a, 5b und 5c: Detailansichten zweier Statorelemente und eines zwischen diesen angeordneten Verbindungselements und
- Fig. 6a, 6b und 6c: verschiedene Ausbildungen eines Läufers eines erfindungsgemäßen Linearmotorsystems.

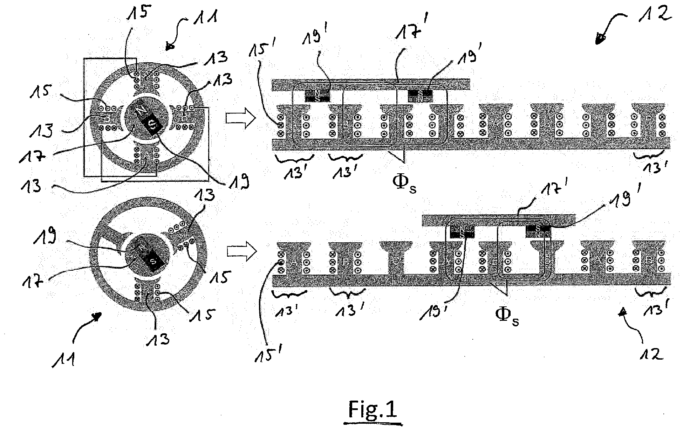

Fig. 1 zeigt auf der linken Seite zwei herkömmliche Elektromotoren 11, die jeweils vier bzw. drei Statorelemente 13 mit jeweiligen Magnetspulen 15 und einen Rotor 17 mit einem Permanentmagneten 19 umfassen. Der magnetische Fluss in den Elektromotoren 11 wird durch die Magnetspulen 15 erzeugt, wenn durch diese ein Strom fließt. Der magnetische Fluss wechselwirkt mit dem Permanentmagneten 19 des Rotors 17 und versetzt den Rotor 17 dadurch in Drehung.

Auf der rechten Seite von Fig. 1 ist der herkömmliche Elektromotor 12 jeweils in ein entsprechendes Linearmotorsystem 12 gemäß dem Stand der Technik umgeformt. Die Statorelemente 13' des Linearmotorsystems 12 entsprechen den Statorelementen 13 des Elektromotors 11, während ein Läufer 17' des Linearmotorsystems 12, der zwei Permanentmagnete 19' aufweist, jeweils dem Rotor 17 des Elektromotors 11 mit den Permanentmagneten 19 entspricht. Die Statorelemente 13 des Elektromotors 11 sind somit sozusagen entlang einer linearen Richtung abgewickelt, und es sind die Statorelemente 13 mehrere Elektromotoren 11 periodisch hintereinander gesetzt, damit sich die Statorelemente 13' des Linearmotorsystems 12 entlang einer vorgegebenen Bewegungsbahn des Läufers 17' erstrecken.

Aufgrund dieser Anordnung der Statorelemente 13' des Linearmotorsystems 12 verläuft der magnetische Fluss Φ_{S} der Statorelemente 13' gemäß dem Stand der Technik jeweils longitudinal bezogen auf eine Bewegungsrichtung bzw. Bewegungsbahn des Läufers 17'. Longitudinal bedeutet in diesem Zusammenhang, dass die Feldlinien des magnetischen Flusses Φ_{S}, der durch die Statorelemente 13' erzeugt wird, jeweils in einer Ebene verlaufen, die parallel zur Bewegungsrichtung bzw. Bewegungsbahn des Läufers 17' ausgerichtet ist.

Die Permanentmagnete 19' des Läufers 17' wechselwirken derart mit dem magnetischen Fluss Φ_{S} der Statorelemente 13', dass der Läufer 17 in dessen Bewegungsrichtung entlang der Statorelemente 13' verschoben wird. Im Linearmotorsystem 12, das auf der rechten Seite von Fig. 1 oben dargestellt ist, können zum Verschieben des Läufers 17' z.B. vier Magnetspulen 15' bestromt werden, während im darunter dargestellten Linearmotorsystem 12 drei Magnetspulen 15' zum Verschieben des Läufers 17' bestromt werden. Aufgrund der longitudinalen Ausrichtung des magnetischen Flusses Φ_{S} werden bei den Linearmotorsystemen 12 gemäß dem Stand der Technik gleichzeitig mindestens zwei benachbarte Statorelemente 13' aktiviert, um den Läufer 17' zu verschieben.

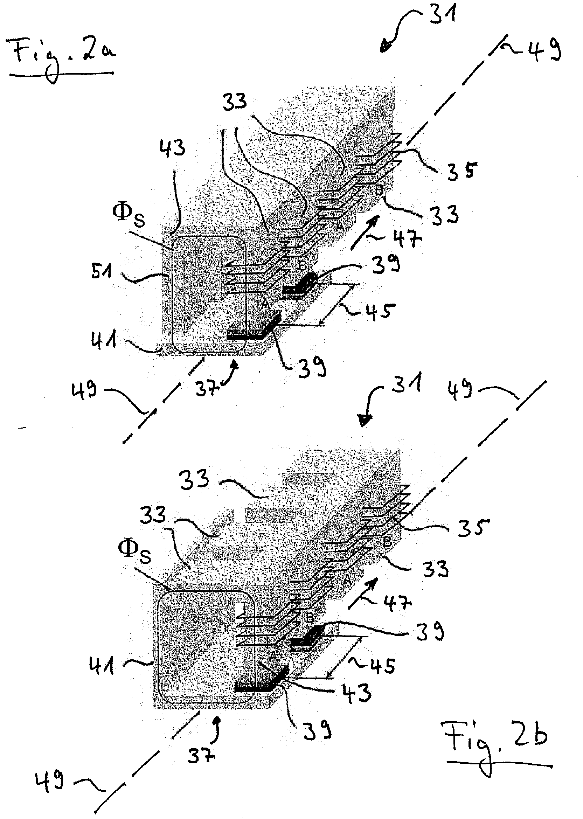

Fig. 2a und 2b zeigen eine erste Ausführungsform eines erfindungsgemäßen Linearmotorsystems 31, das mehrere Statorelemente 33 mit einer jeweiligen Magnetspule 35 und einen Läufer 37 umfasst. Der Läufer 37 ist unterhalb der Statorelemente 33 angeordnet und weist zwei Permanentmagnete 39 auf, die auf einem Grundkörper 41 des Läufers 37 angeordnet sind. Die Magnetspulen 35 der Statorelemente 33 sind jeweils um ein Joch 43 des jeweiligen Statorelements 33 herumgewickelt. Das Joch 43 besteht jeweils aus einem magnetisch leitfähigen Material und weist in der Ausbildung von Fig. 2a eine U-Form auf, während es in der Ausbildung von Fig. 2b eine L-Form aufweist. Der Grundkörper 41 des Läufers 37 hat entsprechend in der Ausbildung von Fig. 2a eine ebene Form, während der Grundkörper 41 des Läufers 37 in der Ausbildung von Fig. 2b eine L-Form aufweist.

Das Joch 43 der jeweiligen Statorelemente 33 und der Grundkörper 41 des Läufers 37 weisen somit eine komplementäre Form auf, um Feldlinien des magnetischen Flusses Φ_{S}, der durch die jeweilige Magnetspule 35 eines Statorelements 33 erzeugt wird, innerhalb des magnetisch leitfähigen Jochs 43 und innerhalb des Grundkörpers 41 und des jeweiligen Permanentmagneten 39 des Läufers 37 zu schließen, abgesehen von einem engen Luftspalt zwischen dem Läufer 37 und dem jeweiligen Joch 43. Ein Abstand 45 der Permanentmagnete 39 entspricht in Fig. 2 dem Abstand zweier benachbarter Statorelemente 33.

Um den Läufer 37 in einer Bewegungsrichtung 47 entlang der Statorelemente 33 zu bewegen, wird mindestens oder genau eine geeignete Magnetspule 35 aktiviert, d.h., dass ein Strom durch diese Magnetspule 35 fließt. Aufgrund der Wechselwirkung mindestens eines Permanentmagneten 39 des Läufers 37 mit dem magnetischen Fluss Φ_{S}, der durch die aktivierte Magnetspule 35 erzeugt wird, wird eine Kraft auf den Läufer in der Bewegungsrichtung 47 erzeugt, sodass der Läufer 37 in diese Richtung verschoben wird. Mittels einer nicht dargestellten Führung folgt der Läufer 37 durch eine aufeinander folgende Aktivierung der jeweiligen Magnetspule 35 benachbarter Statorelemente 33 einer vorgegebenen Bewegungsbahn 49.

Der magnetische Fluss Φ_{M} (nicht gezeigt), der durch Magnetelemente bzw. die Permanentmagneten 39 des Läufers 37 erzeugt wird, verläuft bei der in Fig. 2a und 2b dargestellten Ausführungsform in longitudinaler Richtung, d.h. jeweils in einer Ebene, die parallel zur Bewegungsrichtung 47 des Läufers ausgerichtet ist. Der magnetische Fluss Φ_{M} des Läufers 37 verläuft somit senkrecht zum magnetischen Fluss Φ_{S} der Statorelemente, der transversal bezogen auf die Bewegungsrichtung 47 des Läufers 37 ausgerichtet ist. Die Feldlinien des transversalen magnetischen Flusses Φ_{S} der Statorelemente 33 verlaufen dabei in einer Ebene, die zur Bewegungsrichtung 47 senkrecht ist. Mit anderen Worten bildet der Normalenvektor der Ebenen, in der die Feldlinien des magnetischen Flusses Φ_{S} der Statorelemente 33 verlaufen, einen Tangentenvektor für die Bewegungsbahn 49 des Läufers 37.

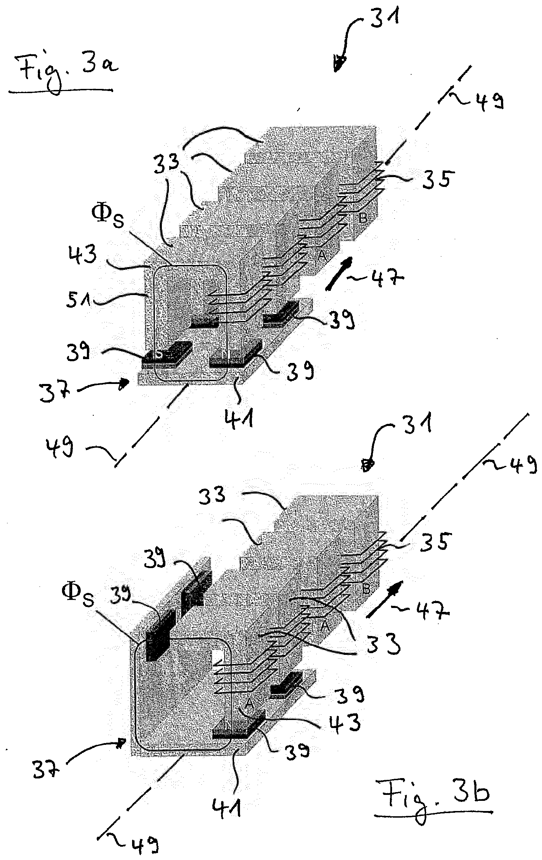

Die in Fig. 3a und 3b dargestellte zweite Ausführungsform des erfindungsgemäßen Linearmotorsystems 31 unterscheidet sich von der in Fig. 2a und 2b dargestellten ersten Ausführungsform zum einen dadurch, dass der Läufer 37 jeweils vier anstatt zwei Permanentmagnete 39 aufweist, die jeweils auf dem Grundkörper 41 des Läufers 37 angeordnet sind. Die jeweiligen Permanentmagnete 39 liegen ferner einem jeweiligen Ende eines Jochs 43 eines jeweiligen Statorelements 33 gegenüber.

Ein weiterer Unterschied der in Fig. 3 dargestellten zweiten Ausführungsform gegenüber der in Fig. 2 dargestellten ersten Ausführungsform besteht darin, dass die Statorelemente 33 jeweils nicht miteinander verbunden sind. Jedes Statorelement 33 weist folglich bei der zweiten Ausführungsform von Fig. 3 jeweils ein eigenes Joch 43 auf. Dadurch sind die einzelnen Statorelemente 33 des Linearmotorsystems 31 magnetisch gegeneinander isoliert und stellen somit modulare Einheiten dar. Aufgrund der Trennung der Joche 43 benachbarter Statorelemente 33 verläuft der magnetische Fluss Φ_{M}, der durch die Permanentmagnete 39 des Läufers 37 erzeugt wird, im Wesentlichen transversal bezogen auf die Bewegungsrichtung 47 des Läufers 37. Der magnetische Fluss Φ_{S} des Statorelements 33 verläuft in einer Ebene, die senkrecht zur Bewegungsrichtung 47 des Läufers 38 ausgerichtet ist.

Sowohl bei der in Fig. 2a und 2b gezeigten ersten Ausführungsform als auch bei der in Fig. 3a und 3b gezeigten zweiten Ausführungsform des Linearmotorsystems 31 ist das Joch 43 der Statorelemente 33 jeweils durch eine gestapelte Laminierung 51 gebildet, d.h. durch flache magnetisch leitende Elemente, die senkrecht zur Bewegungsrichtung 47 des Läufers 37 aufeinander gestapelt und beispielsweise mittels eines Klebstoffs aneinander angebracht sind. Aufgrund dieser Stapelung ist das jeweilige Joch 43 auf eine einfache Weise herstellbar, so dass die Herstellung der Statorelemente 33 vereinfacht wird und kostengünstig erfolgen kann.

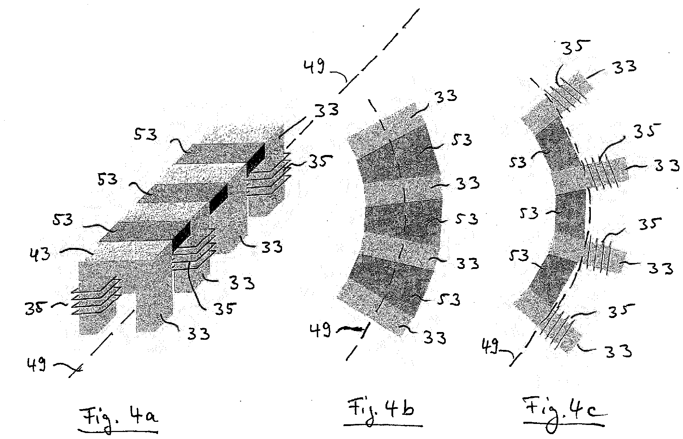

Die in Fig. 3a und 3b gezeigten, voneinander getrennten Statorelemente 33 stellen modulare Einheiten dar, die bei der in Fig. 4a gezeigten dritten Ausführungsform jedoch durch Verbindungselemente 53 miteinander gekoppelt sind. Die Verbindungselemente 53 bestehen dabei aus einem nicht-magnetischen und/oder magnetisch nicht leitfähigem Material, um einen magnetischen Schluss zwischen benachbarten Statorelementen 33 weiterhin zu verhindern. Die Verbindungselemente 53 werden bei dieser Ausführungsform entsprechend der vorgegebenen Bewegungsbahn 49 des Läufers 37 geformt.

Die in Fig. 4a gezeigte Ausbildung umfasst identische, quaderförmige Verbindungselemente 53. Die Verbindungselemente 53 bilden somit zusammen mit den Statorelementen 33 die Bewegungsbahn 49 des Läufers 37, die hier die Form einer Geraden annimmt.

Es ist jedoch auch möglich, die Geometrie der Verbindungselemente 53 derart zu gestalten, dass die Bewegungsrichtung 47 bzw. die Bewegungsbahn 49 des Läufers 37 eine Krümmung aufweist, wie dies in Fig. 4b und 4c gezeigt ist. Die Verbindungselemente 53 sind bei diesen Ausbildungen geometrisch derart geformt, dass die Verbindungselemente 53 zusammen mit den Statorelementen 33 eine Kurve der Bewegungsbahn 49 des Läufers 37 bilden. Die Statorelemente 33 sind dabei jeweils identisch, sodass die Form der Kurve der Bewegungsbahn 49 ausschließlich durch die Form der Verbindungselemente 53 gebildet wird.

Die in Fig. 4b und 4c gezeigten Anordnungen von Statorelementen 33 und Verbindungselementen 53 unterscheiden sich nur durch die Anordnung des Jochs 43 bzw. der Magnetspule 35 bezogen auf das Joch 43. In Fig. 4b sind benachbarte Statorelemente 33 aufgrund der Geometrie des zwischen diesen angeordneten Verbindungselements 53 in axialer Richtung gegeneinander verschoben. Im Gegensatz dazu sind die Statorelemente 33 mit den Magnetspulen 35 in Fig. 4c radial zueinander angeordnet. In beiden Fällen verläuft der magnetische Fluss Φ_{S} der jeweiligen Statorelemente 33 jeweils parallel zu einer Ebene, die senkrecht zur Bewegungsrichtung 47 des Läufers 37 bzw. zu dessen Bewegungsbahn 49 verläuft. Die Ebenen benachbarter Statorelemente 33 verlaufen jedoch bei den Ausgestaltungen von Fig. 4b und 4c nicht parallel zueinander.

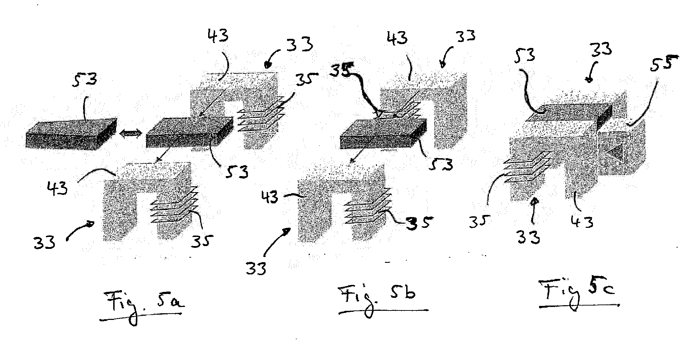

Die Kopplung benachbarter Statorelemente 33 mittels eines Verbindungselements 53 ist in Fig. 5a, 5b und 5c detaillierter dargestellt. Wie in Fig. 5a gezeigt ist, wird ein quaderförmiges, gerades Verbindungselement 53 durch ein anderes Verbindungselement 53 mit einer speziellen Geometrie ersetzt, um eine Krümmung der Bewegungsbahn 49 des Läufers 37 zu erzeugen. Bei der Ausgestaltung von Fig. 5b sind die Magnetspulen 35 der benachbarten Statorelemente 33 gegeneinander verschoben, und zwar derart, dass sie sich an unterschiedlichen Schenkeln eines U-förmigen Jochs 43 befinden. Mit einer solchen Ausgestaltung wird auch bei verschiedenen Bahnkurven eine höhere Leistungsdichte erzielt.

Die Ausgestaltung von Fig. 5c weist in einem Zwischenraum zwischen zwei benachbarten Statorelementen 33, in dem sich auch das Verbindungselement 53 befindet, eine Ansteuerelektronik 55 für die Magnetspulen 35 auf. Dadurch kann der freie Raum zwischen den Statorelementen 33, der nicht durch ein Verbindungselement 53 ausgefüllt wird, optimal ausgenutzt werden.

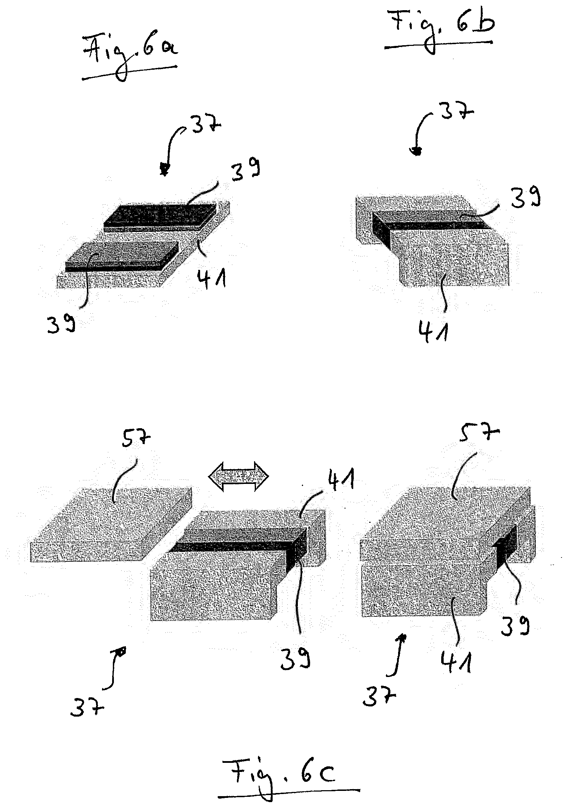

In Fig. 6a, 6b und 6c sind zwei unterschiedliche Ausgestaltungen des Läufers 37 dargestellt. Die Ausgestaltung von Fig. 6a entspricht derjenigen, die auch in Fig. 2a und 2b sowie in Fig. 3a und 3b gezeigt ist und bei der zwei Permanentmagnete 39 auf einem Grundkörper 41 des Läufers 37 angeordnet sind.

Bei der Ausgestaltung, die in Fig. 6b gezeigt ist, sind die Permanentmagnete 39 jedoch in den Grundkörper 41 des Läufers 37 eingebettet. Die eingebetteten Permanentmagnete 39 sind beispielsweise AlNiCo-Magnete.

Durch die eingebetteten Magnete wird der magnetische Fluss innerhalb des Läufers 37 gebündelt. Außerdem besteht die Möglichkeit, einen magnetischen Nebenschluss innerhalb des Läufers 37 mittels der eingebetteten Permanentmagnete 39 zu bilden. Aufgrund des Nebenschlusses und der Bündelung des magnetischen Flusses innerhalb des Läufers 37 wird die Handhabung beim Zusammensetzen des Läufers 37 erleichtert. Wie in Fig. 6c dargestellt ist, wird ein Träger 57 des Läufers einfach auf den Grundkörper 41 mit eingebetteten Permanentmagneten 39 aufgeschoben, ohne dass die Gefahr eines Bruchs oder einer Verletzung aufgrund der starken Anziehungskräfte der verwendeten Permanentmagnete 39 besteht.

### Bezugszeichenliste

- 11: Elektromotor
- 12: Linearmotorsystem
- 13, 13': Statorelement
- 15, 15': Magnetspule
- 17: Rotor
- 17': Läufer
- 19, 19': Permanentmagnet
- Φ_{S}: magnetischer Fluss des Statorelements
- 31: Linearmotorsystem
- 33: Statorelement
- 35: Magnetspule
- 37: Läufer
- 39: Permanentmagnet
- 41: Grundkörper des Läufers
- 43: Joch
- 45: Abstand der Permanentmagnete
- 47: Bewegungsrichtung des Läufers
- 49: Bewegungsbahn des Läufers
- 51: Laminierung
- 53: Verbindungselement
- 55: Ansteuerelektronik
- 57: Träger des Läufers

## Patentansprüche

1. Linearmotorsystem (31) mit
mehreren Statorelementen (33), die jeweils eine Magnetspule (35) umfassen, wobei die Magnetspule (35) einen magnetischen Fluss in dem jeweiligen Statorelement (33) erzeugt,
zumindest einem Läufer (37), welcher zumindest ein Magnetelement (39) aufweist, welches mit den Magnetspulen (35) der Statorelemente (33) in Wechselwirkung steht, wobei der Läufer (37) mittels Aktivierung zumindest eines Statorelements (33) in einer Bewegungsrichtung (47) relativ zu den Statorelementen (33) verschiebbar ist,
wobei der magnetische Fluss in zumindest einem der Statorelemente (33) bezogen auf die Bewegungsrichtung (47) des Läufers (33) zumindest abschnittsweise transversal verläuft,
wobei das Linearmotorsystem (31) ausgebildet ist, die Magnetspulen (35) der Statorelemente (33) derart einzeln und unabhängig voneinander zu aktivieren, so dass jedes Statorelement (33) einzeln und unabhängig von den anderen Statorelementen (33) aktivierbar ist,
**dadurch gekennzeichnet, dass**
nicht aktivierte Statorelemente (33) zur Positionserfassung des Läufers (37) verwendet werden, wenn sich der Läufer (37) im Bereich eines zu dem nicht aktivierten Statorelement (33) benachbarten Statorelements (33) befindet.

2. Linearmotorsystem (31) nach Anspruch 1,
**dadurch gekennzeichnet, dass**
das Linearmotorsystem (31) ausgebildet ist, die Statorelemente (33) derart zu aktivieren, dass nur die Magnetspulen (35) derjenigen Statorelemente (33) aktiviert sind, die mit den Magnetelementen (39) des Läufers (37) in direkter magnetischer Wechselwirkung stehen.

3. Linearmotorsystem (31) nach Anspruch 1 oder 2,
**dadurch gekennzeichnet, dass**
das Linearmotorsystem (31) ausgebildet ist, den Läufer (37) durch die dynamische Aktivierung einer Magnetspule (35) eines einzigen Statorelements (33) zu bewegen.

4. Linearmotorsystem (31) nach zumindest einem der vorstehenden Ansprüche,
**dadurch gekennzeichnet, dass**
zumindest eines der Statorelemente (33) mehrere in einer Richtung senkrecht zur Bewegungsrichtung (47) des Läufers aufeinander gestapelte magnetisch leitende Elemente umfasst.

5. Linearmotorsystem (31) nach zumindest einem der vorstehenden Ansprüche,
**dadurch gekennzeichnet, dass**
zumindest eines der Statorelemente (33) ein magnetisch leitfähiges Joch (43) umfasst, das eine U-, E-, L- oder I-Form aufweist.

6. Linearmotorsystem (31) nach zumindest einem der vorstehenden Ansprüche,
**dadurch gekennzeichnet, dass**
mehrere Statorelemente (33) entlang der Bewegungsrichtung (47) jeweils durch ein Verbindungselement (53) gekoppelt sind und die Verbindungselemente (53) teilweise derart geformt sind, dass die Bewegungsrichtung (47) eine Krümmung aufweist.

7. Linearmotorsystem (31) nach Anspruch 6,
**dadurch gekennzeichnet, dass**
die Verbindungselemente (53) aus einem nicht-magnetischen und/oder magnetisch nicht leitfähigen Material geformt sind.

8. Linearmotorsystem (31) nach einem der Ansprüche 6 oder 7,
**dadurch gekennzeichnet, dass**
zumindest eines der Verbindungselemente (53) eine Ansteuerelektronik (55) zur Ansteuerung zumindest einer der Magnetspulen (35) umfasst und
die Ansteuerelektronik (55) insbesondere in zumindest einem Verbindungselement (53) eine Magnetspule (35) eines Statorelements (33) ansteuert, welches beabstandet zu dem Verbindungselement (53) angeordnet ist.

9. Linearmotorsystem (31) nach zumindest einem der vorstehenden Ansprüche,
**dadurch gekennzeichnet, dass**
das Magnetelement (39) in den Läufer (37) eingebettet ist und/oder ein magnetischer Nebenschluss im Läufer (37) erfolgt.

10. Linearmotorsystem (31) nach zumindest einem der vorstehenden Ansprüche,
**dadurch gekennzeichnet, dass**
der magnetische Fluss der Magnetelemente (39) des Läufers (37) bezogen auf die Bewegungsrichtung (47) des Läufers (37) transversal verläuft.

11. Linearmotorsystem (31) nach zumindest einem der vorstehenden Ansprüche,
**dadurch gekennzeichnet, dass**
die Positionserfassung des Läufers (37) im Stillstand oder insbesondere bei einer langsamen Bewegung des Läufers (37) durch eine Messung einer Veränderung der Induktivität zumindest einer der Magnetspulen (35) erfolgt.

12. Linearmotorsystem (31) nach zumindest einem der vorstehenden Ansprüche,
**dadurch gekennzeichnet, dass**
zur Positionserfassung des Läufers (37) ein Träger (57) des Läufers (37) oder der Läufer (37) selbst bezüglich der Form und/oder des Materials derart ausgebildet ist, dass die Induktivität benachbarter, nicht aktivierter Magnetspulen (35) positionsabhängig verändert wird.

13. Linearmotorsystem (31) nach zumindest einem der vorstehenden Ansprüche,
**dadurch gekennzeichnet, dass**
mehrere Läufer (37) vorgesehen sind, wobei das Linearmotorsystem (31) ausgebildet ist, die Läufer (37) unabhängig voneinander zu bewegen.

14. Verfahren zum Betreiben eines Linearmotorsystems, insbesondere nach zumindest einem der vorstehenden Ansprüche, das mehrere Statorelemente (33), die jeweils eine Magnetspule (35) zum Erzeugen eines magnetischen Flusses in dem jeweiligen Statorelement (33) aufweisen, und zumindest einen Läufer (37) umfasst, welcher zumindest ein Magnetelement (39) aufweist, das mit den Magnetspulen (35) der Statorelemente (33) in Wechselwirkung steht,
wobei das Verfahren umfasst, dass die Magnetspulen (35) der Statorelemente (33) des Linearmotorsystems (31) derart einzeln und unabhängig voneinander aktiviert werden, so dass jedes Statorelement (33) einzeln und unabhängig von den anderen Statorelementen (33) aktiviert wird, und der Läufer (37) dadurch in einer Bewegungsrichtung (47) relativ zu den Statorelementen (33) verschoben wird,
**dadurch gekennzeichnet, dass** nicht aktivierte Statorelemente (33) zur Positionserfassung des Läufers (37) verwendet werden, wenn sich der Läufer (37) im Bereich eines zu dem nicht aktivierten Statorelement (33) benachbarten Statorelements (33) befindet.

## Claims

1. A linear motor system (31) comprising
a plurality of stator elements (33) which each have a magnetic coil (35), wherein the magnetic coil (15) generates a magnetic flux in the respective stator element (33);
at least one carrier (37) which has at least one magnetic element (39) which interacts with the magnetic coils (35) of the stator elements (33), wherein the carrier (37) can be displaced in a direction of movement (47) relative to the stator elements (33) by activating at least one stator element (33),
wherein the magnetic flux in at least one of the stator elements (33) at least sectionally extends transversely with respect to the direction of movement (47) of the carrier (33),
wherein the linear motor system (31) is configured to activate the magnetic coils (35) of the stator elements (33) individually and independently of one another such that each stator element (33) can be activated individually and independently of the other stator elements (33), **characterized in that**
non-activated stator elements (33) are used to detect the position of the carrier (37) if the carrier (37) is located in the region of a stator element (33) adjacent to the non-activated stator element (33).

2. A linear motor system (31) according to claim 1,
**characterized in that**
the linear motor system (31) is configured to activate the stator elements (33) such that only the magnetic coils (35) of those stator elements (33) are activated which are in direct magnetic interaction with the magnetic elements (39) of the carrier (37).

3. A linear motor system (31) according to claim 1 or 2,
**characterized in that**
the linear motor system (31) is configured to move the carrier (37) by dynamically activating a magnetic coil (35) of a single stator element (33).

4. A linear motor system (31) according to at least one of the preceding claims,
**characterized in that**
at least one of the stator elements (33) comprises a plurality of magnetically conductive elements stacked on top of one another in a direction perpendicular to the direction of movement (47) of the carrier.

5. A linear motor system (31) according to at least one of the preceding claims,
**characterized in that**
at least one of the stator elements (33) comprises a magnetically conductive yoke (43) which has a U shape, an E shape, an L shape or an I shape.

6. A linear motor system (31) according to at least one of the preceding claims,
**characterized in that**
a plurality of stator elements (33) are each coupled by a connection element (53) along the direction of movement (47), and
in particular the connection elements (53) are partly shaped such that the direction of movement (47) has a curvature.

7. A linear motor system (31) according to claim 6,
**characterized in that**
the connection elements (53) are formed from a non-magnetic and/or magnetically non-conductive material.

8. A linear motor system (31) according to one of the claims 6 or 7,
**characterized in that**
at least one of the connection elements (53) comprises control electronics (55) for controlling at least one of the magnetic coils (35), and
the control electronics (55), in particular in at least one connection element (53), control a magnetic coil (35) of a stator element (33) which is arranged spaced apart from the connection element (53).

9. A linear motor system (31) according to at least one of the preceding claims,
**characterized in that**
the magnetic element (39) is embedded in the carrier (37) and/or a magnetic shunt takes place in the carrier (37).

10. A linear motor system (31) according to at least one of the preceding claims,
**characterized in that**
the magnetic flux of the magnetic elements (39) of the carrier (37) runs transversely with respect to the direction of movement (47) of the carrier (37).

11. A linear motor system (31) according to at least one of the preceding claims,
**characterized in that**
the position detection of the carrier (37) takes place when stationary or in particular during a slow movement of the carrier (37) by measuring a change in the inductance of at least one of the magnetic coils (35).

12. A linear motor system (31) according to at least one of the preceding claims,
**characterized in that**,
for the position detection of the carrier (37), a support (57) of the carrier (37) or the carrier (37) itself is designed in terms of shape and/or material such that the inductance of adjacent, non-activated magnetic coils (35) is changed depending on the position.

13. A linear motor system (31) according to at least one of the preceding claims,
**characterized in that**
a plurality of carriers (37) are provided, with the linear motor system (31) being configured to move the carriers (37) independently of one another.

14. A method for operating a linear motor system, in particular according to at least one of the preceding claims, which comprises a plurality of stator elements (33), which each have a magnetic coil (35) for generating a magnetic flux in the respective stator element (33), and at least one carrier (37) which has at least one magnetic element (39) which interacts with the magnetic coils (35) of the stator elements (33),
wherein the method comprises activating the magnetic coils (35) of the stator elements (33) of the linear motor system (31) individually and independently of one another such that each stator element (33) is activated individually and independently of the other stator elements (33), and the carrier (37) is thereby displaced in a direction of movement (47) relative to the stator elements (33),
**characterized in that**
non-activated stator elements (33) are used to detect the position of the carrier (37) if the carrier (37) is located in the region of a stator element (33) adjacent to the non-activated stator element (33).

## Revendications

1. Système de moteur linéaire (31), comprenant
une pluralité d'éléments de stator (33) qui comprennent chacun une bobine magnétique (35), la bobine magnétique (35) générant un flux magnétique dans l'élément de stator respectif (33),
au moins un curseur (37) qui présente au moins un élément magnétique (39) interagissant avec les bobines magnétiques (35) des éléments de stator (33), le curseur (37) pouvant être déplacé dans une direction de déplacement (47) par rapport aux éléments de stator (33) au moyen de l'activation d'au moins un élément de stator (33),
le flux magnétique dans l'un au moins des éléments de stator (33) s'étendant au moins localement transversalement par rapport à la direction de déplacement (47) du curseur (33),
le système de moteur linéaire (31) étant conçu pour activer les bobines magnétiques (35) des éléments de stator (33) individuellement et indépendamment les unes des autres, de sorte que chaque élément de stator (33) peut être activé individuellement et indépendamment des autres éléments de stator (33),
**caractérisé en ce que**
des éléments de stator (33) non activés sont utilisés pour détecter la position du curseur (37), lorsque le curseur (37) se trouve dans la zone d'un élément de stator (33) voisin de l'élément de stator (33) non activé.

2. Système de moteur linéaire (31) selon la revendication 1,
**caractérisé en ce que**
le système de moteur linéaire (31) est conçu pour activer les éléments de stator (33) de telle sorte que seules les bobines magnétiques (35) de ceux des éléments de stator (33) sont activées, qui sont en interaction magnétique directe avec les éléments magnétiques (39) du curseur (37).

3. Système de moteur linéaire (31) selon la revendication 1 ou 2,
**caractérisé en ce que**
le système de moteur linéaire (31) est conçu pour déplacer le curseur (37) par l'activation dynamique d'une bobine magnétique (35) d'un seul élément de stator (33).

4. Système de moteur linéaire (31) selon l'une au moins des revendications précédentes,
**caractérisé en ce que**
l'un au moins des éléments de stator (33) comprend plusieurs éléments magnétiquement conducteurs empilés les uns sur les autres dans une direction perpendiculaire à la direction de déplacement (47) du curseur.

5. Système de moteur linéaire (31) selon l'une au moins des revendications précédentes,
**caractérisé en ce que**
l'un au moins des éléments de stator (33) comprend une culasse magnétiquement conductrice (43) qui présente une forme en U, en E, en L ou en I.

6. Système de moteur linéaire (31) selon au moins l'une des revendications précédentes,
**caractérisé en ce que**
plusieurs éléments de stator (33) sont couplés le long de la direction de déplacement (47), chacun par un élément de liaison (53), et, en particulier, les éléments de liaison (53) sont formés en partie de telle sorte que la direction de déplacement (47) présente une courbure.

7. Système de moteur linéaire (31) selon la revendication 6,
**caractérisé en ce que**
les éléments de liaison (53) sont formés d'un matériau non magnétique et/ou magnétiquement non conducteur.

8. Système de moteur linéaire (31) selon l'une des revendications 6 ou 7, **caractérisé en ce que**
l'un au moins des éléments de liaison (53) comprend une unité électronique de commande (55) pour commander l'une au moins des bobines magnétiques (35), et
l'unité électronique de commande (55) en particulier dans au moins un élément de liaison (53) commande une bobine magnétique (35) d'un élément de stator (33) qui est disposé à distance de l'élément de liaison (53).

9. Système de moteur linéaire (31) selon l'une au moins des revendications précédentes,
**caractérisé en ce que**
l'élément magnétique (39) est encastré dans curseur (37), et/ou un flux magnétique de dérivation est réalisé dans le curseur (37).

10. Système de moteur linéaire (31) selon l'une au moins des revendications précédentes,
**caractérisé en ce que**
le flux magnétique des éléments magnétiques (39) du curseur (37) s'étend transversalement par rapport à la direction de déplacement (47) du curseur (37).

11. Système de moteur linéaire (31) selon l'une au moins des revendications précédentes,
**caractérisé en ce que**
la détection de la position du curseur (37) à l'arrêt ou en particulier lors d'un mouvement lent du curseur (37) est effectuée par une mesure d'une variation de l'inductance de l'une au moins des bobines magnétiques (35).

12. Système de moteur linéaire (31) selon l'une au moins des revendications précédentes,
**caractérisé en ce que**
pour la détection de la position du curseur (37), un support (57) du curseur (37) ou le curseur (37) lui-même est conçu, en ce qui concerne la forme et/ou le matériau, de telle sorte que l'inductance de bobines magnétiques (35) voisines, non activées, est modifiée en fonction de la position.

13. Système de moteur linéaire (31) selon l'une au moins des revendications précédentes,
**caractérisé en ce que**
il est prévu plusieurs curseurs (37), le système de moteur linéaire (31) étant conçu pour déplacer les curseurs (37) indépendamment les uns des autres.

14. Procédé de fonctionnement d'un système de moteur linéaire, en particulier selon l'une au moins des revendications précédentes, comprenant une pluralité d'éléments de stator (33) qui comprennent chacun une bobine magnétique (35) pour générer un flux magnétique dans l'élément de stator respectif (33), et au moins un curseur (37) qui présente au moins un élément magnétique (39) interagissant avec les bobines magnétiques (35) des éléments de stator (33),
le procédé consistant à
activer les bobines magnétiques (35) des éléments de stator (33) du système de moteur linéaire (31) individuellement et indépendamment les unes des autres, de telle sorte que chaque élément de stator (33) est activé individuellement et indépendamment des autres éléments de stator (33), et à ainsi déplacer le curseur (37) dans une direction de déplacement (47) par rapport aux éléments de stator (33),
**caractérisé en ce que**
des éléments de stator (33) non activés sont utilisés pour détecter la position du curseur (37), lorsque le curseur (37) se trouve dans la zone d'un élément de stator (33) voisin de l'élément de stator (33) non activé.
